# FASCICULE DE BREVET EUROPEEN

(11) **EP 3 068 818 B1**
(45) Date de publication et mention de la délivrance du brevet: **20.01.2021**
(21) Numéro de dépôt: 14809921.1
(22) Date de dépôt: 14.11.2014
(51) Int. Cl.: C08G 69/04, C08G 69/08

(54) **PROCÉDÉ DE SYNTHÈSE DE POLYAMIDE**
POLYAMIDSYNTHESEVERFAHREN
POLYAMIDE SYNTHESIS METHOD

(30) Priorité: 15.11.2013 FR 1361211
(43) Date de publication de la demande: 21.09.2016
(73) Titulaire: Arkema France, 92700 Colombes (FR)
(72) Inventeur: BRIFFAUD, Thierry, 27300 BERNAY (FR); NOGUES, Pierre, F-27300 Bernay (FR); LE, Guillaume, F-14460 Colombelles (FR); MALET, Frédéric, F-69007 Lyon (FR)
(74) Mandataire: Arkema Patent
(86) Numéro de dépôt international: PCT/FR2014/052904
(87) Numéro de publication internationale: WO 2015/071604

(56) Documents cités:
- WO-A1-2011/138051
- FR-A- 1 210 181
- FR-A- 1 210 182
- FR-A- 1 426 092
- PERKINS R B ET AL: "Nylon-9 from Unsaturated Fatty Derivatives: Preparation and Characterization", JOURNAL OF THE AMERICAN OIL CHEMISTS' SOCIETY, SPRINGER, DE, vol. 52, 1 novembre 1975 (1975-11-01), pages 473-477, XP002545488, ISSN: 0003-021X, DOI: 10.1007/BF02637493
- CARRIERE F ET AL: "Polycondensation catalysée de l'amino-11 undecanoate d'éthyle", BULLETIN DE LA SOCIETE CHIMIQUE DE FRANCE, SOCIETE FRANCAISE DE CHIMIE. PARIS, FRANCE, no. 3, 1 janvier 1970 (1970-01-01), pages 1148-1150, XP009178802, ISSN: 0037-8968 cité dans la demande

## Description

### DOMAINE DE L'INVENTION

La présente invention concerne un procédé de synthèse de polyamide à partir d'un aminoester, ainsi que le polyamide préparé selon ce procédé.

### ARRIERE-PLAN TECHNIQUE

Les polyamides sont préparés par polycondensation d'une diamine avec un diacide, ou par polycondensation d'un aminoacide.

Il est connu d'apporter le diacide ou l'aminoacide sous forme d'un ester. Par exemple, l'article *Catalyzed polycondensation of ethyl 11-aminoundecanoate,* de F. Carrière et H. Sekiguchi, dans Bulletin de la société chimique de France, 1970, p.1148-1150, décrit la polycondensation de l'aminoundécanoate d'éthyle en présence de divers acides.

Le document JP 57080426 décrit une réaction équimolaire d'hexaméthylènediamine avec un carboxylate de diméthyle à une température de 110-160°C, en présence de 40 à 90 % en poids d'eau, suivie de l'élimination du méthanol produit afin d'obtenir un polyamide intermédiaire, qui est ensuite polymérisé selon une technique conventionnelle.

Le document US 6,011,134 décrit la synthèse de PA 6.6 à partir d'adipate de monométhyle et d'hexaméthylènediamine, avec une première étape (a) de réaction dans des proportions équimolaires et en présence d'eau, à une température de 100 à 165°C, avec distillation simultanée du méthanol et de l'eau, puis une deuxième étape (b) de chauffage à une température de 200 à 260°C à pression élevée (au moins 100 psig soit 6,9 bar) avec distillation de l'eau résiduelle suivi d'un chauffage à une température de 270 à 280°C avec réduction de la pression à la pression atmosphérique pour polycondenser le résidu de la distillation.

Un problème constaté dans le contexte de la synthèse de polyamides à partir d'esters est celui des réactions secondaires favorisant notamment l'apparition d'amines N-alkylées. Ces produits indésirables perturbent la polycondensation ainsi que la cristallisation des polyamides.

Il existe donc un besoin de mettre au point un procédé amélioré de fabrication de polyamide, notamment à partir d'aminoester, présentant un taux réduit de N-alkylation.

### RESUME DE L'INVENTION

L'invention concerne en premier lieu un procédé de fabrication de polyamide à partir d'un aminoester de formule NH₂-(CH₂)ₙ-COOR, dans laquelle R représente un groupement alkyle et n représente un entier valant de 8 à 14, comprenant :
- une première étape de réaction en présence d'eau, à une première température ;
- suivie d'une deuxième étape de réaction à une deuxième température supérieure à la première température.

Selon un mode de réalisation, la deuxième température est supérieure à la première température d'au moins 50°C, de préférence d'au moins 60°C, de manière plus particulièrement préférée d'au moins 80°C, voire d'au moins 100°C.

Selon un mode de réalisation, la première température est inférieure ou égale à 120°C, de préférence inférieure ou égale à 110°C, et de manière plus particulièrement préférée inférieure ou égale à 100°C ; et/ou la deuxième température est supérieure ou égale à 150°C, de préférence supérieure ou égale à 180°C, et de manière plus particulièrement préférée supérieure ou égale à 200°C.

Selon un mode de réalisation, la durée de la première étape est d'au moins 20 minutes, de préférence au moins 40 minutes, de manière plus particulièrement préférée au moins 60 minutes, voire au moins 90 minutes.

Selon un mode de réalisation, R représente un groupement alkyle linéaire ou ramifié, et de préférence linéaire, comprenant de 1 à 4 atomes de carbones ; et de préférence, R est un groupement méthyle ou un groupement éthyle.

Selon un mode de réalisation, n vaut de 8 à 12 et de préférence vaut 10 ou 11 ; et de préférence, l'aminoester est l'aminoundécanoate de méthyle ou l'aminododécanoate de méthyle.

Selon un mode de réalisation, le procédé comprend au cours de la première étape la distillation et l'élimination de l'alcool de formule R-OH.

Selon un mode de réalisation, le procédé comprend, avant la première étape ou au début de la première étape, l'ajout d'un solvant organique, de préférence un alcool, et de manière plus particulièrement préférée l'alcool de formule R OH.

Selon un mode de réalisation, le procédé comprend, avant la première étape ou au début de la première étape, l'ajout d'un catalyseur de l'hydrolyse de l'aminoester, de préférence choisi parmi NaOH et KOH.

Selon un mode de réalisation, le rapport massique aminoester / eau au début de la première étape vaut de 1:5 à 5:1, de préférence de 1:3 à 3:1, de manière plus particulièrement préférée de 1:2 à 2:1 ; et idéalement environ 1:1.

Selon un mode de réalisation, le procédé comprend l'évaporation et l'élimination d'eau au cours de la deuxième étape.

Selon un mode de réalisation, de préférence, la première étape est effectuée à une pression inférieure à 1,1 bar absolus.

Selon un mode de réalisation, le procédé est un procédé de type discontinu.

Selon un mode de réalisation, le procédé est un procédé de type continu.

L'invention concerne également un polyamide susceptible d'être obtenu selon le procédé décrit ci-dessus, caractérisé en ce qu'il présente un de N-alkylation inférieur ou égal à 40 µeq/g.

Selon un mode de réalisation, il s'agit d'un polyundécanamide ou d'un polydodécanamide.

Le polyamide présente un taux de N-alkylation inférieur ou égal à 40 µeq/g, ou inférieur ou égal à 10 µeq/g, de préférence inférieur ou égal à 5 µeq/g, plus particulièrement inférieur ou égal à 2 µeq/g, et idéalement inférieur ou égal à 1 µeq/g.

La présente invention permet de surmonter les inconvénients de l'état de la technique. Elle fournit plus particulièrement un procédé de fabrication de polyamide à partir d'aminoester dans lequel le polyamide obtenu présente un taux de N-alkylation réduit.

Cela est accompli grâce à une synthèse en deux étapes, à savoir une première étape en présence d'eau permettant l'hydrolyse de l'aminoester, et une deuxième étape de polycondensation de l'aminoacide issu de cette hydrolyse. Bien entendu, la polycondensation peut débuter partiellement au cours de la première étape et l'hydrolyse se poursuivre partiellement au cours de la deuxième étape.

En outre, la première étape est effectuée à une première température qui est inférieure à celle de la deuxième étape. En effet, les présents inventeurs ont découvert que la température lors de l'étape d'hydrolyse a un effet extrêmement important sur le taux de N-alkylation. La première étape doit donc être effectuée à une température modérée, alors que la deuxième étape est de préférence effectuée à une température relativement élevée pour garantir l'efficacité de la polycondensation, c'est-à-dire en particulier l'obtention d'un polymère de viscosité mesurée dans le m-crésol supérieure à 0,8.

*A contrario,* dans le document US 6,011,134 concernant la production de PA 6.6 à partir d'hexaméthylènediamine et d'adipate de monométhyle, la N-méthylation observée d'une part atteint des niveaux relativement importants, et d'autre part est bien moins sensible à la température.

### DESCRIPTION DE MODES DE REALISATION DE L'INVENTION

L'invention est maintenant décrite plus en détail et de façon non limitative dans la description qui suit.

En l'absence d'indications contraires, les proportions ou pourcentages indiqués sont massiques.

L'invention prévoit de produire un polyamide à partir d'un aminoester de formule NH₂-(CH₂)ₙ-COOR, dans laquelle R représente un groupement alkyle et n représente un entier valant de 8 à 14. Le groupement alkyle est de préférence non substitué.

Selon un mode de réalisation, deux ou plusieurs aminoesters présentant des indices n différents sont utilisés, de sorte à former des copolyamides.

Mais il est préféré qu'un seul aminoester présentant un seul indice n soit utilisé, de sorte à former un homopolymère.

Selon des modes de réalisation, n est supérieur ou égal à 9, ou supérieur ou égal à 10. Sans vouloir être liés par une théorie, les inventeurs estiment que, plus l'indice n est élevé, moins l'aminoacide issu de l'hydrolyse est soluble dans l'eau, et donc moins celui-ci est susceptible de subir une N-méthylation indésirable.

Selon un mode de réalisation préféré de l'invention, n est compris dans la gamme de 9 à 14, de préférence de 9 à 13, de préférence de 9 à 11, de préférence n est 9 ou 10 ou 11, de préférence n est 10 ou 11.

Selon un mode de réalisation, n vaut 10 et le polyamide synthétisé est le PA 11 (polyundécanamide).

Selon un mode de réalisation, n vaut 11 et le polyamide synthétisé est le PA 12 (polydodécanamide).

Le groupement R est un groupement alkyle linéaire ou ramifié, et de préférence linéaire. Il peut comporter par exemple de 1 à 4 atomes de carbone. Il peut s'agir par exemple d'un groupement méthyle, éthyle, propyle, isopropyle, n-butyle, iso-butyle, sec-butyle ou tert-butyle. Les groupements éthyle et méthyle sont préférés, et tout particulièrement le méthyle.

La première étape de la réaction est effectuée en présence d'eau et est destinée à hydrolyser l'aminoester, à une première température modérée limitant la production de composés N-alkylés. L'hydrolyse conduit à la production d'aminoacide de formule NH₂-(CH₂)ₙ-COOH et d'alcool de formule R-OH.

Le rapport massique eau / aminoester peut être par exemple de 1:5 à 5:1, ou de 1:3 à 3:1, ou de 1:2 à 2:1, ou d'environ 1:1.

Ainsi, la première température peut être inférieure ou égale à 120°C ; ou inférieure ou égale à 115°C ; ou inférieure ou égale à 110°C ; ou inférieure ou égale à 105°C ; ou inférieure ou égale à 100°C ; ou inférieure ou égale à 95°C ; ou inférieure ou égale à 90°C ; ou inférieure ou égale à 85°C ; ou inférieure ou égale à 80°C ; ou inférieure ou égale à 75°C ; ou inférieure ou égale à 70°C ; ou inférieure ou égale à 65°C ; ou inférieure ou égale à 60°C ; ou inférieure ou égale à 55°C ; ou inférieure ou égale à 50°C ; ou inférieure ou égale à 45°C ; ou inférieure ou égale à 40°C.

De manière surprenante et inattendue, ce critère de première température inférieure ou égale à 120°C est d'autant plus avantageux dans le procédé de l'invention que n est supérieur ou égal à 9.

Selon un mode de réalisation, l'hydrolyse de l'aminoester est une hydrolyse enzymatique, catalysée par exemple par des lipases telles que décrites dans la publication Enzyme and Microbial Technology, 30 (2002) p.19-25.

La durée de la première étape est par exemple d'au moins 20 minutes, ou d'au moins 30 minutes, ou d'au moins 40 minutes, ou d'au moins 50 minutes, ou d'au moins 1 heure, ou d'au moins 1 heure 30, ou d'au moins 2 heures, ou d'au moins 3 heures.

Au cours de la première étape, la première température est de préférence constante. Alternativement, cette première température peut varier au cours de la première étape, par exemple de manière monotone ou cyclique. Une phase de montée en température peut être prévue en début de première étape ou avant la première étape. De préférence, celle-ci présente une durée inférieure à 30 minutes, ou inférieure à 20 minutes, ou inférieure à 15 minutes, ou inférieure à 10 minutes.

La première étape peut être effectuée sous vide de quelques centaines de mbars, à pression atmosphérique, ou à une pression supérieure (par exemple de 1,5 à 3 bars absolus).

De préférence, l'alcool de formule R-OH qui est produit lors de l'hydrolyse est distillé et éliminé lors de la première étape (il s'agit du méthanol dans le mode de réalisation préféré). Le terme « éliminé » dans la présente demande signifie un retrait, une séparation du composé concerné ; il ne désigne pas nécessairement une élimination totale du composé. Ainsi, le réacteur peut comporter une teneur résiduelle en alcool.

Alternativement, l'alcool peut être éliminé à la deuxième étape (éventuellement simultanément à l'eau) voire à l'issue de la réaction.

Selon un mode de réalisation, on introduit un solvant dans le milieu avant la première étape, ou au début de la première étape, de sorte à favoriser l'association de l'eau avec l'aminoester. A titre de solvant, on peut utiliser notamment l'alcool R-OH (de préférence donc le méthanol), mais également des solvants polaires aprotiques tels que le dioxanne, le tétrahydroxyfurane, le diméthylsulfoxyde, la n-méthylpyrrolidone, l'acétonitrile. De préférence, la fraction massique de solvant est inférieure ou égale à 70 %, de préférence inférieure ou égale à 50, 30 ou 20 %.

On peut également introduire dans le milieu un catalyseur de l'hydrolyse de l'aminoester, soit avant la première étape soit au début de la première étape. Ce catalyseur est de préférence une base minérale (hydroxyde de métal alcalin ou alcalinoterreux tel que NaOH, KOH, Ca(OH)₂, Ba(OH)₂). On peut aussi utiliser une base forte organique aprotique telle que le triazabicyclodécène, le triazole, le 1,8-diazabicyclo[5.4.0]undéc-7-ène (DBU), le 1,5-diazabicyclo[4.3.0]non-5-ène (DBN), le 1,4-diazabicyclo[2.2.2]octane (DABCO)...

Ce catalyseur est utilisé de préférence dans une concentration inférieure ou égale à 1% molaire par rapport à l'aminoester.

Avantageusement, le mélange réactionnel est activé par l'application d'ultrasons, ou par cavitation mécanique contrôlée, ou par l'application d'un rayonnement micro-ondes.

On peut également introduire l'aminoester de manière continue sur une durée de quelques heures (de préférence 1 à 5) dans le milieu d'hydrolyse.

La deuxième étape de la réaction est destinée à polycondenser l'aminoacide issu de l'hydrolyse pour former le polyamide recherché. Cette deuxième étape est usuelle pour une polymérisation d'amines et d'acides conduisant à des polyamides. Elle peut s'effectuer en phase solide ou en phase fondue.

Cette deuxième étape est effectuée à une deuxième température supérieure à la première pour une meilleure efficacité de la polycondensation. La deuxième température est par exemple supérieure ou égale à 150°C, ou à 160°C, ou à 170°C, ou à 180°C, ou à 190°C, ou à 200°C, ou à 210°C, ou à 220°C, ou à 230°C, ou à 240°C.

La durée de la deuxième étape dépend de la température et de la teneur éventuelle en catalyseur.

Au cours de la deuxième étape, la deuxième température est de préférence constante. Alternativement, cette deuxième température peut varier au cours de la deuxième étape, par exemple de manière monotone ou cyclique. Une phase de montée en température est prévue entre la première étape et la deuxième étape. De préférence, celle-ci présente une durée inférieure à 30 minutes, ou inférieure à 20 minutes, ou inférieure à 15 minutes, ou inférieure à 10 minutes, ou inférieure à 5 minutes.

La deuxième étape est généralement effectuée à une pression supérieure à celle de la première étape, à savoir une pression de vapeur d'eau inférieure ou égale à la pression de vapeur saturante de l'eau à la température considérée. Alternativement, notamment dans l'éventualité d'un procédé continu, les deux étapes peuvent être effectuées à pression atmosphérique.

De préférence, l'eau est évaporée et éliminée au cours de la deuxième étape qui se termine alors par une phase sous pression atmosphérique voire sous vide.

On peut introduire dans le milieu un catalyseur de la polycondensation de l'aminoacide, soit avant la première étape, soit au cours de la première étape, soit entre la première étape et la deuxième étape, soit au début de la deuxième étape, tel que l'acide phosphorique ou hypophosphoreux. La quantité de catalyseur est inférieure ou égale à 3000 ppm par rapport à la quantité du polyamide aliphatique et avantageusement entre 50 et 1000 ppm.

Divers additifs peuvent être également introduits dans le milieu un catalyseur de la polycondensation de l'aminoacide, soit avant la première étape, soit au cours de la première étape, soit entre la première étape et la deuxième étape, soit au début de la deuxième étape, à savoir : des stabilisants UV, des stabilisants thermiques et/ou des plastifiants.

Le poids moléculaire du polyamide obtenu peut être contrôlé de façon classique par suivi de la viscosité à l'état fondu du produit. On peut éventuellement ajouter un régulateur de chaîne (par exemple monoacide carboxylique, monoamine, diacide ou diamine) pour limiter l'étendue de la polymérisation.

A l'issue de la réaction, le polyamide est collecté du réacteur à l'état fondu.

Le polyamide obtenu selon le procédé de l'invention est caractérisé par :
- une teneur résiduelle en fins de chaîne esters supérieure à 0,1 ou à 1 µeq/g ;
- un faible taux de N-alkylation (N-méthylation dans l'hypothèse où le groupement R est le groupement méthyle), à savoir un taux de N-alklyation inférieur ou égal à 40 µeq/g, ou à 30 µeq/g, ou à 20 µeq/g, ou à 10 µeq/g, ou à 5 µeq/g, ou à 2 µeq/g, ou à 1 µeq/g.

Le taux de fins de chaînes esters et de N-alkylation peut être mesuré par analyse RMN après dissolution dans un mélange hexafluoro-isopropanol (ou HFIP) / CD₂Cl₂. La valeur en µeq/g correspond au nombre de µmoles de composés (ester ou N-alkylés) par gramme de polyamide. Les composés N-alkylés incluent les fins de chaînes N-alkylamine et di-N-alkylamine ainsi que les structures N-alkylamides tertaires.

### EXEMPLES

Les exemples suivants illustrent l'invention sans la limiter.

### Exemple 1 - hydrolyse de l'amino 11 ester méthylique à une température de 110°C puis polymérisation à 250°C

Le mélange réactionnel est un mélange eau / amino 11 ester méthylique dans un rapport massique de 1:1. Le mélange réactionnel est introduit dans un réacteur à reflux total. La réaction est effectuée à une température de consigne de 145°C, correspondant à une température du mélange réactionnel de 110°C. La durée de la réaction est de 90 minutes. Le milieu est ensuite lyophilisé (de sorte à éliminer l'eau et le méthanol), et le lyophilisat est analysé par RMN. La teneur en composés N-méthylés est inférieure à la limite de détection de 5 µeq/g.

Le lyophilisat est ensuite chauffé à 250°C sous balayage d'azote dans un réacteur en verre préalablement inerté à l'azote. Après 2h30 de chauffage, le polymère obtenu est refroidi puis analysé par RMN. La teneur en composés N-méthylés est de 42 µeq/g. Parmi ces composés, la teneur en fins de chaînes N-diméthylées est de 3 µeq/g.

### Exemple 2 - hydrolyse de l'amino 11 ester méthylique à une température de 130°C puis polymérisation à 250°C

Le mélange réactionnel est un mélange eau / amino 11 ester méthylique dans un rapport massique de 1:1. Le mélange réactionnel est introduit dans un réacteur à reflux total. La réaction est effectuée à une température du mélange réactionnel de 130°C. La durée de la réaction est de 90 minutes, après une phase de chauffe à 5°C/min. Le milieu est agité à 10 rpm. La pression en fin de réaction est d'environ 2,8 bar.

Le milieu obtenu est diphasique (phase blanche pâteuse et phase liquide). Il est mélangé puis lyophilisé (de sorte à éliminer l'eau et le méthanol), et le lyophilisat est analysé par RMN. La teneur en composés N-méthylés est de 38 µeq/g.

Le lyophilisat est ensuite chauffé à 250°C sous balayage d'azote dans un réacteur en verre préalablement inerté à l'azote. Après 2h30 de chauffage, le polymère obtenu est refroidi puis analysé par RMN. La teneur en composés N-méthylés est de 73 µeq/g. Parmi ces composés, la teneur en fins de chaînes N-diméthylées est de 7 µeq/g.

### Exemple 3 - hydrolyse de l'amino 12 ester méthylique à une température de 110°C puis polymérisation à 250°C

Le mélange réactionnel est un mélange eau / amino 12 ester méthylique dans un rapport massique de 1:1. Le mélange réactionnel est introduit dans un réacteur à reflux total. La réaction est effectuée à une température de consigne de 145°C, correspondant à une température du mélange réactionnel de 110°C. La durée de la réaction est de 90 minutes. Le milieu est ensuite lyophilisé (de sorte à éliminer l'eau et le méthanol.

Le lyophilisat est ensuite chauffé à 250°C sous balayage d'azote dans un réacteur en verre préalablement inerté à l'azote. Après 2h30 de chauffage, le polymère obtenu est refroidi puis analysé par RMN. La teneur en composés N-méthylés est de 32 µeq/g. Parmi ces composés, la teneur en fins de chaînes N-diméthylées est de 4 µeq/g.

### Exemple 4 - hydrolyse de l'amino 6 ester méthylique à une température de 110°C puis polymérisation à 250°C (exemple de référence)

Le mélange réactionnel est un mélange eau / amino 6 ester méthylique dans un rapport massique de 1:1. Le mélange réactionnel est introduit dans un réacteur à reflux total. La réaction est effectuée à une température de consigne de 145°C, correspondant à une température du mélange réactionnel de 110°C. La durée de la réaction est de 90 minutes. Le milieu est ensuite lyophilisé (de sorte à éliminer l'eau et le méthanol).

Le lyophilisat est ensuite chauffé à 250°C sous balayage d'azote dans un réacteur en verre préalablement inerté à l'azote. Après 2h30 de chauffage, le polymère obtenu est refroidi puis analysé par RMN. La teneur en composés N-méthylés est de 12 µeq/g. Parmi ces composés, les fins de chaînes N-diméthylées ne sont pas détectées.

### Exemple 5 - hydrolyse de l'amino 6 ester méthylique à une température de 130°C puis polymérisation à 250°C (exemple de référence)

Le mélange réactionnel est un mélange eau / amino 6 ester méthylique dans un rapport massique de 1:1. Le mélange réactionnel est introduit dans un réacteur à reflux total. La réaction est effectuée à une température de mélange réactionnel de 130°C. La durée de la réaction est de 90 minutes. Le milieu est ensuite lyophilisé (de sorte à éliminer l'eau et le méthanol).

Le lyophilisat est ensuite chauffé à 250°C sous balayage d'azote dans un réacteur en verre préalablement inerté à l'azote. Après 2h30 de chauffage, le polymère obtenu est refroidi puis analysé par RMN. Aucun composé N-méthylé n'est détecté.

### Exemple 6 - chauffage de l'amino 11 ester méthylique sans eau à une température de 110°C puis polymérisation à 250°C (exemple comparatif)

L'amino 11 ester méthylique est introduit dans un réacteur à reflux total. La réaction est effectuée à une température de mélange réactionnel de 110°C. La durée de la réaction est de 90 minutes. Le milieu est ensuite lyophilisé (de sorte à éliminer le méthanol).

Le lyophilisat est ensuite chauffé à 250°C sous balayage d'azote dans un réacteur en verre préalablement inerté à l'azote. Après 2h30 de chauffage, le polymère obtenu est refroidi puis analysé par RMN. Il est cassant et présente une odeur désagréable de poisson en décomposition. La teneur en composés N-méthylés est de 150 µeq/g. Parmi ces composés, la teneur en fins de chaînes N-diméthylées est de 95 µeq/g.

## Revendications

1. Procédé de fabrication de polyamide à partir d'un aminoester de formule NH₂-(CH₂)ₙ-COOR, dans laquelle R représente un groupement alkyle et n représente un entier valant de 8 à 14, comprenant :
- une première étape de réaction en présence d'eau, à une première température ;
- suivie d'une deuxième étape de réaction à une deuxième température supérieure à la première température.

2. Procédé selon la revendication 1, dans lequel la deuxième température est supérieure à la première température d'au moins 50°C, de préférence d'au moins 60°C, de manière plus particulièrement préférée d'au moins 80°C, voire d'au moins 100°C.

3. Procédé selon la revendication 1 ou 2, dans lequel la première température est inférieure ou égale à 120°C, de préférence inférieure ou égale à et de manière plus particulièrement préférée inférieure ou égale à 100°C ; et/ou dans lequel la deuxième température est supérieure ou égale à 150°C, de préférence supérieure ou égale à 180°C, et de manière plus particulièrement préférée supérieure ou égale à 200°C.

4. Procédé selon l'une des revendications 1 à 3, dans lequel la durée de la première étape est d'au moins 20 minutes, de préférence au moins 40 minutes, de manière plus particulièrement préférée au moins 60 minutes, voire au moins 90 minutes.

5. Procédé selon l'une des revendications 1 à 4, dans lequel R représente un groupement alkyle linéaire ou ramifié, et de préférence linéaire, comprenant de 1 à 4 atomes de carbones ; et dans lequel, de préférence, R est un groupement méthyle ou un groupement éthyle.

6. Procédé selon l'une des revendications 1 à 5, dans lequel n vaut de 8 à 12 et de préférence vaut 10 ou 11 ; et dans lequel, de préférence, l'aminoester est l'aminoundécanoate de méthyle ou l'aminododécanoate de méthyle.

7. Procédé selon l'une des revendications 1 à 6, comprenant au cours de la première étape la distillation et l'élimination de l'alcool de formule R-OH.

8. Procédé selon l'une des revendications 1 à 7, comprenant, avant la première étape ou au début de la première étape, l'ajout d'un solvant organique, de préférence un alcool, et de manière plus particulièrement préférée l'alcool de formule R-OH.

9. Procédé selon l'une des revendications 1 à 8, comprenant, avant la première étape ou au début de la première étape, l'ajout d'un catalyseur de l'hydrolyse de l'aminoester, de préférence choisi parmi NaOH et KOH.

10. Procédé selon l'une des revendications 1 à 9, dans lequel le rapport massique aminoester /eau au début de la première étape vaut de 1:5 à 5:1, de préférence de 1:3 à 3:1, de manière plus particulièrement préférée de 1:2 à 2:1 ; et idéalement environ 1:1.

11. Procédé selon l'une des revendications 1 à 10, comprenant l'évaporation et l'élimination d'eau au cours de la deuxième étape.

12. Procédé selon l'une des revendications 1 à 11, dans lequel, de préférence, la première étape est effectuée à une pression inférieure à 1,1 bar absolus.

13. Procédé selon l'une des revendications 1 à 12, qui est un procédé de type discontinu.

14. Procédé selon l'une des revendications 1 à 12, qui est un procédé de type continu.

15. Polyamide susceptible d'être obtenu selon le procédé de l'une des revendications l'une des revendications 1 à 14, **caractérisé en ce qu'**il présente un taux de N-alkylation inférieur ou égal à 40 µeq/g.

16. Polyamide selon la revendication 15, qui est un polyundécanamide ou un polydodécanamide.

17. Polyamide selon la revendication 15 ou 16, présentant un taux de N-alkylation inférieur ou égal à 10 µeq/g, de préférence inférieur ou égal à 5 µeq/g, plus particulièrement inférieur ou égal à 2 µeq/g, et idéalement inférieur ou égal à 1 µeq/g.

## Patentansprüche

1. Verfahren zur Herstellung von Polyamid aus einem Aminoester der Formel NH₂-(CH₂)ₙ-COOR, in der R für eine Alkylgruppe steht und n für eine ganze Zahl mit einem Wert von 8 bis 14 steht, umfassend:
- einen ersten Reaktionsschritt in Gegenwart von Wasser bei einer ersten Temperatur
- gefolgt von einem zweiten Reaktionsschritt bei einer zweiten Temperatur, die über der ersten Temperatur liegt.

2. Verfahren nach Anspruch 1, wobei die zweite Temperatur um mindestens 50 °C, vorzugsweise um mindestens 60 °C, weiter bevorzugt um mindestens 80 °C oder sogar um mindestens 100 °C über der ersten Temperatur liegt.

3. Verfahren nach Anspruch 1 oder 2, wobei die erste Temperatur kleiner oder gleich 120 °C, vorzugsweise kleiner oder gleich 110 °C und weiter bevorzugt kleiner oder gleich 100 °C, ist und/oder wobei die zweite Temperatur größer oder gleich 150 °C, vorzugsweise größer oder gleich 180 °C und weiter bevorzugt größer oder gleich 200 °C ist.

4. Verfahren nach einem der Ansprüche 1 bis 3, wobei die Dauer des ersten Schritts mindestens 20 Minuten, vorzugsweise mindestens 40 Minuten, weiter bevorzugt mindestens 60 Minuten oder sogar mindestens 90 Minuten beträgt.

5. Verfahren nach einem der Ansprüche 1 bis 4, wobei R für eine lineare oder verzweigte und vorzugsweise lineare Alkylgruppe mit 1 bis 4 Kohlenstoffatomen steht und wobei R vorzugsweise für eine Methylgruppe oder eine Ethylgruppe steht.

6. Verfahren nach einem der Ansprüche 1 bis 5, wobei n 8 bis 12 und vorzugsweise 10 oder 11 beträgt und wobei es sich bei dem Aminoester vorzugsweise um Aminoundecansäuremethylester oder Aminododecansäuremethylester handelt.

7. Verfahren nach einem der Ansprüche 1 bis 6, das im Lauf des ersten Schritts das Abdestillieren des Alkohols der Formel R-OH umfasst.

8. Verfahren nach einem der Ansprüche 1 bis 7, das vor dem ersten Schritt oder zu Beginn des ersten Schritts das Zugeben eines organischen Lösungsmittels, vorzugsweise eines Alkohols und weiter bevorzugt des Alkohols der Formel R-OH umfasst.

9. Verfahren nach einem der Ansprüche 1 bis 8, das vor dem ersten Schritt oder zu Beginn des ersten Schritts das Zugeben eines Katalysators der Hydrolyse des Aminoesters, der vorzugsweise aus NaOH und KOH ausgewählt wird, umfasst.

10. Verfahren nach einem der Ansprüche 1 bis 9, wobei das Aminoester/Wasser-Massenverhältnis 1:5 bis 5:1, vorzugsweise 1:3 bis 3:1, weiter bevorzugt 1:2 bis 2:1 und idealerweise etwa 1:1 beträgt.

11. Verfahren nach einem der Ansprüche 1 bis 10, umfassend das Abdampfen von Wasser während des zweiten Schritts.

12. Verfahren nach einem der Ansprüche 1 bis 11, wobei der erste Schritt vorzugsweise bei einem Druck von weniger als 1,1 bar absolut durchgeführt wird.

13. Verfahren nach einem der Ansprüche 1 bis 12, bei dem es sich um ein diskontinuierliches Verfahren handelt.

14. Verfahren nach einem der Ansprüche 1 bis 12, bei dem es sich um ein kontinuierliches Verfahren handelt.

15. Polyamid, das nach dem Verfahren nach einem der Ansprüche einem der Ansprüche 1 bis 14 erhältlich ist, **dadurch gekennzeichnet, dass** es einen N-Alkylierungsgrad kleiner oder gleich 40 µeq/g aufweist.

16. Polyamid nach Anspruch 15, bei dem es sich um ein Polyundecanamid oder ein Polydodecanamid handelt.

17. Polyamid nach Anspruch 15 oder 16 mit einem N-Alkylierungsgrad kleiner oder gleich 10 µeq/g, vorzugsweise kleiner oder gleich 5 µeq/g, spezieller kleiner oder gleich 2 µeq/g und idealerweise kleiner oder gleich 1 µeq/g.

## Claims

1. Process for producing polyamide from an amino ester of formula NH₂-(CH₂)ₙ-COOR, in which R represents an alkyl group and n represents an integer ranging from 8 to 14, comprising:
- a first reaction step in the presence of water, at a first temperature;
- followed by a second reaction step at a second temperature higher than the first temperature.

2. Process according to Claim 1, wherein the second temperature is higher than the first temperature by at least 50°C, preferably by at least 60°C, more particularly preferably by at least 80°C, or even by at least 100°C.

3. Process according to Claim 1 or 2, wherein the first temperature is lower than or equal to 120°C, preferably lower than or equal to and more particularly preferably lower than or equal to 100°C; and/or wherein the second temperature is higher than or equal to 150°C, preferably higher than or equal to 180°C, and more particularly preferably higher than or equal to 200°C.

4. Process according to one of Claims 1 to 3, wherein the duration of the first step is at least 20 minutes, preferably at least 40 minutes, more particularly preferably at least 60 minutes, or even at least 90 minutes.

5. Process according to one of Claims 1 to 4, wherein R represents a linear or branched, and preferably linear, alkyl group comprising from 1 to 4 carbon atoms; and wherein, preferably, R is a methyl group or an ethyl group.

6. Process according to one of Claims 1 to 5, wherein n is from 8 to 12 and preferably is 10 or 11; and wherein, preferably, the amino ester is methyl aminoundecanoate or methyl aminododecanoate.

7. Process according to one of Claims 1 to 6, comprising, during the first step, the distillation and elimination of the alcohol of formula R-OH.

8. Process according to one of Claims 1 to 7, comprising, before the first step or at the start of the first step, the addition of an organic solvent, preferably an alcohol, and more particularly preferably the alcohol of formula R-OH.

9. Process according to one of Claims 1 to 8, comprising, before the first step or at the start of the first step, the addition of a catalyst for hydrolysis of the amino ester, preferably chosen from NaOH and KOH.

10. Process according to one of Claims 1 to 9, wherein the amino ester/water weight ratio at the start of the first step is from 1:5 to 5:1, preferably from 1:3 to 3:1, more particularly preferably from 1:2 to 2:1, and ideally approximately 1:1.

11. Process according to one of Claims 1 to 10, comprising the evaporation and elimination of water during the second step.

12. Process according to one of Claims 1 to 11, wherein the first step is preferably carried out at a pressure lower than 1.1 bar absolute.

13. Process according to one of Claims 1 to 12, which is a batchwise process.

14. Process according to one of Claims 1 to 12, which is a continuous process.

15. Polyamide that can be obtained according to the process of one of Claims one of Claims 1 to 14, **characterized in that** it exhibits a degree of N-alkylation lower than or equal to 40 µeq/g.

16. Polyamide according to Claim 15, which is a polyundecanamide or a polydodecanamide.

17. Polyamide according to Claim 15 or 16, exhibiting a degree of N-alkylation lower than or equal to 10 µeq/g, preferably lower than or equal to 5 µeq/g, more particularly lower than or equal to 2 µeq/g, and ideally lower than or equal to 1 µeq/g.
